Europäisches Patentamt

European Patent Office

Office européen des brevets

(19)

(11) **EP 1 231 611 A2**

(12) ## EUROPEAN PATENT APPLICATION

(43) Date of publication:
**14.08.2002 Bulletin 2002/33**

(51) Int Cl.$^7$: **H01B 1/22**

(21) Application number: **01310165.4**

(22) Date of filing: **05.12.2001**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **05.12.2000 JP 2000370340**

(71) Applicant: **Shipley Company LLC**
**Marlborough, MA 01752 (US)**

(72) Inventors:
 • **Tsuchida, Hideki**
  **Saitama 349-0127 (JP)**

 • **Imanari, Masaaki**
  **Saitama 341-0026 (JP)**
 • **Yomogida, Koichi**
  **Saitama-shi, Saitama 330-0023 (JP)**
 • **Nawafune, Hidemi**
  **Osaka 569-1121 (JP)**

(74) Representative: **Kent, Venetia Katherine**
 **Rohm and Haas (UK) Ltd**
 **European Operations Patent Dept.**
 **Lennig House**
 **2 Mason's Avenue**
 **Croydon, CR9 3NB (GB)**

(54) **Non-charging resin composite and method for manufacturing the same**

(57)    [Means] A non-charging resin composite material can be manufactured by using liquid containing metal ions to treat the surface of a resin base treated with ion-exchange group introduction agent, thereby introducing metal ions. By then converting said metal ions, a component containing metal clement is introduced at the surface of the resin base in such a small amount that charging of the resin base can be prevented, without increasing the low conductivity intrinsic to the resin base to above a certain level, which has been difficult in the past. With said non-charging resin composite material, damage due to the adhesion of dirt or dust on the base is prevented, as is damage to the base caused by static electricity resulting from charging.

**EP 1 231 611 A2**

## Description

[Detailed description of the invention]

[Technological field of the invention]

The present invention relates to a non-charging resin composite material wherein a component containing metal element is present at the surface of a resin base, and a method for manufacturing the aforementioned non-charging resin composite material.

[Prior art]

Resin bases constituting electronic parts that are composed of epoxy resin, polyimide resin and other such resins, and bases composed of resins such as ABS resin, methyl methacrylate, polyethylene and vinyl chloride are poor conductors of electricity, and thus readily charge due to friction, etc. With charged bases, a base can be readily marred due to discharge of static electricity arising from charging, and dirt and durst tend to adhere to the base due to static electricity. This makes processing of said resin base difficult, which is a particularly serious problem in the manufacture of precision parts that cannot permit the presence of marring, fine dirt or dust on the base. In addition, there are many products in which the adhesion of dust and dirt due to charging is undesirable in post-processed resin products.

The best way to prevent charging in resin bases is to prevent the isolation of electric charge, but there are currently many aspects of the charging mechanism that are unclear, and a solution to the problem is thus difficult. In order to reduce local electric fields formed due to charge isolation, charging is prevented by covering the surface with a high-dielectric material, by ionizing air in the vicinity with the objective of increasing isolated charge leak rate, or coating the surface with a substance having a large dielectric constant [sic; repeated]:

Examples of methods for preventing charging are temporary charging prevention methods and long-term charging prevention methods. Examples of temporary charge-elimination methods, are air ionization methods and methods in which a material is coated with a surfactant or substance having surfactant as primary component, thereby increasing moisture absorption at the base surface, and decreasing the resistance of the surface. These methods, however, are lacking in persistence, and are used only with the objective of manifesting effects for a determinate period of time in order to eliminate processing problems during processing.

An example of a long-term charge prevention method is a method in which conductive substance such as silver or copper powder is introduced into the resin base. A mode for introduction of conductive substances into resin base is a method in which conducive substance is incorporated into the resin base. In such cases, characteristics that are intrinsic to the resin base can be lost, such as the low conductivity that is characteristic of resin bases. Grain size and distribution of the metal are important factors in incorporating metals while maintaining the characteristics of a resin base, but it is extremely difficult to obtain a resin base having the desired properties while admixing metal and controlling these factors.

Another mode of introducing conductive substance into a resin base are methods in which metal is introduced at the surface of the resin base. Examples of this type of introduction method include metal vapor deposition, casting methods and plating methods. When introducing metal at the surface of the resin base, there are problems with the amount of metal introduced related to binding between the metal and the resin base, but with these methods, it is not always necessary to introduce metal with good binding properties. In addition, it is difficult to introduce metal at an amount whereby charging is sufficiently eliminated without increasing the conductivity at the base surface above a certain level.

For example, when the resin constituting the resin base is polyimide resin, it is difficult to form bumps that will have an anchoring effect, and so providing sufficient binding is more difficult than with other resins. In addition, with ABS resin, round pits are formed by the preferential clution of butadiene particles during etching with chromic acid-sulfuric acid mixed solution, and so it is possible to improve binding by providing anchoring effects. With epoxy resin or polyimide resin, it is possible to improve binding by providing non-uniformities at the surface by etching the epoxy resin with permanganic acid solution, etc. However, even when metal is introduced by widely-used electroless plating carried out after etching the surface as a pretreatment, it is extremely difficult to introduce metal in extremely small amounts so that charging can be prevented without increasing the conductivity above a certain level.

[Problems to be solved by the invention]

For this reason, there is strong demand for a method whereby component containing extremely small amounts of metal element is introduced at the surface of the resin base at levels at which charging of the resin base can be prevented without increasing the low conductivity intrinsic to the resin base.

In addition, a non-charging resin composite material is desired that has component containing extremely small amounts of metal element at the surface of a resin base at levels at which charging of the resin base can be prevented without increasing the low conductivity intrinsic to the resin base.

The present invention was developed in light of this state of affairs, and has the objective of offering a resin composite material wherein a component containing metal element is present at the surface of a base resin in a condition that produces excellent binding, and in an amount such that charging of the resin base can be prevented without increasing the resin base surface conductivity above a certain level. In addition, the invention has the objective of offering a method for forming the aforementioned resin composite material by means of treatment with an ion exchange group introduction agent, and by means of a comparatively simple treatment process that employs a liquid system containing a metal element.

[Means for solving the problems]

The present invention offers a non-charging resin composite material that is obtained by using a liquid containing metal ions to treat the surface of a resin base that has been treated with ion exchange group introduction agent, thereby introducing metal ions, followed by conversion of said metal ions, where component containing metal element with a resistivity within a specific range is present at a determinate amount at the surface of the resin base so that a degree of conductivity is produced that can prevent charging without increasing the conductivity intrinsic to the resin base above a certain level.

In addition, the present invention offers a method for forming the aforementioned non-charging resin composite material, which comprises (1) a process wherein resin base is treated with ion exchange group introduction agent, (2) a process wherein treatment is carried out with a liquid containing metal ions, and (3) a process wherein component containing metal element is introduced at the surface of the resin by a conversion treatment.

Mode of implementation of the invention

The present invention offers a resin composite material in which a component containing a metal element is present at the surface of a resin base, which is obtained by using a resin base treated with ion exchange group introduction agent, and treating its surface with a liquid containing metal ions to introduce metal ions, and then converting said metal ions, said non-charging resin composite material being characterized in that the ratio of the surface resistance of said resin composite material to the resistivity of said component containing metal element is $10^{12}$ to $10^{17}$ $(1/\square \cdot cm)$.

In the present invention, the resistivity $(\Omega \cdot cm)$ is the inverse of the conductivity, and the component containing metal element has a specific characteristic resistivity value that is intrinsic to the material.

In addition, "surface resistance $(\Omega/\square)$ is calculated by the following formula for a case where the region to be measured is coated with a conductive coating at a width of 1 mm and a length of 5 mm, and the resistance R is measured for a region that is not coated with conductive coaling (region of length 5 mm).

$$\text{Surface electrical resistance } (\Omega/\square) = R (\Omega) \times \text{width (mm)/length (mm)}$$

In the present invention, controlling the value of "the ratio of the resin composite material surface resistance to the metal element-containing component resistance" means controlling the amount of component containing metal element present at the surface of the resin composite material. This value is preferably $10^{12}$-$10^{17}$ $(1/\square \cdot cm)$, with $10^{13}$-$10^{15}$ $(1/\square \cdot cm)$ being preferred.

The term "non-charging resin composite material" used in the present invention refers to a resin base that has a surface resistance of a degree that charging can be prevented without decreasing the high surface resistance intrinsic to the resin base below a certain level. Preferably, the non-charging resin composite material of the present invention has a surface resistance of $10^6$ to $10^{11}$ $\Omega/\square$, with $10^7$-$10^9$ $\Omega/\square$ being preferred.

The resin base that can be used for the resin composite material of the present invention can be composed of any resin, provided that it has physical properties appropriate to the objectives of use, for example, strength, and corrosion resistance. In addition, the resin base can be any form, without particular restrictions. The resin bases that can be used in the present invention are not restricted to resin moldings, and can be composite materials formed by introducing reinforcing materials such as glass fiber and reinforcers into the resin. Alternatively, the material can be formed by providing a coating of resin on a base composed of ceramic, glass, metal or various other members.

Any resin can be used for the resin base, and examples include high-density polyethylene, medium-density polyethylene, branched low-density polyethylene, linear low-density polyethylene, ultra-high-molecular-weight polyethylene and other polyethylene resins, polypropylene resin, polybutadiene, polybutene resin, polybutylene resin, polystyrene resin and other polyolefin resins; polyvinyl chloride resin, polyvinylidene chloride resin, polyvinylidene chloride-vinyl chloride copolymer resin, polyethylene chloride, polypropylene chloride, tetrafluoroethylene and other halogenated resins; AS resin; ABS resin; MBS resin; polyvinyl alcohol resin; polymethyl acrylate and other polyacrylate ester resins; polymethyl methacrylate and other polymethacrylate ester resins; methyl methacrylate-styrene copolymer resins; maleic anhydride-styrene copolymer resins; polyvinyl acetate resins; cellulose propionate resins, cellulose acetate resins and other cellulose resins; epoxy resin; polyimide resin; nylon and other polyamide resins; polyamidoimide resins; polyarylate resin; polyether imide resin; polyester ether ketone resin; polyethylene oxide resin; PET resin and various other polyester resins; polycarbonate resin; polysulfone resin; polyvinyl ether resin; polyvinyl butyral resin; polyphenylene oxide and other polyphenylene ether resins; polyphenylene sulfide resin; polybutylene terephthalate resin; polymethylpentene resin; polyacetal resin; vinyl chloride-vinyl acetate copolymer; ethylene-vinyl acetate copolymer; ethylene vinyl chloride copolymer; and other copolymer and blended thermoplastic resins, epoxy resin; xylene resin; guanamine resin; diallylphthalate resin; vinyl ester resin; phenol resin; unsaturated polyester resin; furan resin: polyimide resin; polyurethane resin; maleic acid resin; melamine resin; urea resin; and other thermosetting resins, as well as mixtures thereof. However, examples are not restricted to these. Preferred resins are epoxy resin, polyimide resin, vinyl resin, phenol resin, nylon resin, polyphenylene ether resin, polypropylene resin, fluorine-based resin and ABS resin, with preferred examples being epoxy resin, polyimide resin, polyphenylene ether resin, fluorine-based resin and ABS resin, with epoxy resin and polyimide resin being additionally desirable. The resin base can be composed of individual resins, or can be composed of multiple resins. In addition, the surface that is treated with ion exchange group introduction agent need not be the resin base, as the base can be a composite formed by applying or laminating a resin onto another base.

The component containing metal element in the resin composite material of the present invention refers to a metal or metal compound. The metal can be a metal composed of an individual metal element, or an alloy composed of two or more metal elements. The metal can be in various forms, e.g., forms in which multiple metal elements form a solid solution, forms in which a non-crystalline body is formed from a mixed body of component metals comprising various metal elements, or forms in which these are combined. The term "compound" can also refer to compounds in which multiple types of metal element form intermetallic compounds and compounds that are composed of one or more types of metal element and one or more types of element other than the metal elements. The metal compound contained in the component that contains metal elements can be one type of compound or multiple types of compound. Examples of metal elements, in terms of simple bodies formed from metal elements, include Sc, Ti, V, Cr, Mn, Fe, Co, Ni, Cu, Zn, Ga, Ge, As, Se, Y, Zr, Nb, Mo, Tc, Ru, Rh, Pd, Ag, Cd, In, Sb, Te, Hf, Ta, W, Re, Os, Ir, Pt, Au, Hg, Tl, Pb, Bi and Po.

When the component containing metal element is a metal, examples of said metal include metals selected from a group comprising the metals Sc, Ti, V, Cr, Mn, Fe, Co, Ni, Cu, Zn, Ga, Ge, As, Se, Y, Zr, Nb, Mo, Tc, Ru, Rh, Pd, Ag, Cd, In, Sb, Te, Hf, Ta, W, Re, Os, Ir, Pt, Au, Hg, Tl, Pb, Bi, Po and alloys thereof. Preferred metals are those selected from the metals V, Cr, Mn, Fe, Co, Ni, Cu, Ga, As, Se, Mo, Ru, Rh, Pd, Ag, Cd, In, Sb, Te, Os, Ir, Pt, Au, Hg, Pb, Bi and alloys thereof. Additionally desirable metals are those selected from a group comprising the metals V, Mn, Co, Ni, Cu, Ga, As, Se, Mo, Pd, Ag, In, Sb, Te, Pt, Au, Hg, Bi and alloys thereof. The most preferred metals are those selected from a group comprising the metals Co, Ni, Cu, Pd, Ag, Pt, Au and alloys thereof.

The metal compound is a compound in which multiple types of metals form intermetallic compounds, and a compound composed of one or more types of metal element and one or more types of element other than the metal element. The metal compounds that can be used as component containing metal elements pertaining to the present invention can be any metal compound, provided that it exhibits non-charging properties when introduced into resin base. Examples that can be cited include GaAs, InAs and other metal arsenides; GaSb, InSb and other metal antimonides; ZnSe, CdSe, HgSe and other metal selenides; CdTe, HgTe and other metal tellurides; CuS, PdS, CdS, ZnS, AgS and other metal sulfides; $Fe_2O_3$, $Fe_3O_4$, CrO, Co-Ni-O, MnO-ZnO-$Fe_2O_3$ and other metal oxides; metal hydroxides; metal nitrides; metal silicides; and metal borides, but examples are not restricted to these.

In the present invention, the aforementioned metals or metal compounds in the metal element-containing component and the aforementioned resin used in the resin base can be freely selected. When the component containing metal element is a metal, the combination of metal and resin preferably comprises a resin selected from a group comprising epoxy resin, polyimide resin, vinyl resin, phenol resin, nylon resin, polyphenylene ether resin, polypropylene resin, fluorine-based resin or ABS resin and mixtures thereof for the resin, and a metal selected from a group comprising V, Mn, Co, Ni, Cu, Ga, As, Se, Mo, Pd, Ag, In, Sb, Te, Pt, Au, Hg, Bi and alloys thereof for the metal. It is additionally desirable for the resin to be a resin selected from a group comprising epoxy resin, polyimide resin, vinyl resin, phenol resin, nylon resin, polyphenylene ether resin, polypropylene resin, ABS resin and mixtures thereof, and for the metal to be a metal selected from a group comprising V, Mn, Co, Ni, Cu, Ga, As, Se, Mo, Pd, Ag, In, Sb, Tc, Pt, Au, Hg, Bi and alloys thereof. It is further desirable for the resin to be a resin selected from a group comprising epoxy resin, polyimide resin, polyphenylene ether resin, ABS resin and mixtures thereof, and for the metal to be a metal selected from a group comprising V, Mn, Co, Ni, Cu, Ga, As, Se, Mo, Pd, Ag, In, Sb, Te, Pt, Au, Hg, Bi and alloys thereof,

When the component containing metal element is a metal sulfide, the combination of resin and metal sulfide is preferably one wherein the resin is selected from a group comprising epoxy resin, polyimide resin, polyphenylene ether resin, fluorine-based resin, ABS resin or mixtures thereof, and the metal sulfide is selected from a group comprising $CuS$, $CdS$, $ZnS$, $PdS$, $Ag_2S$, $As_4S_4$, $As_2S_3$, $As_2S_6$, $TeS$, $TeS_3$ and mixtures thereof. It is additionally desirable for the resin to be selected from a group comprising epoxy resin, polyimide resin, polyphenylene ether resin, ABS resin or mixtures thereof, and for the metal sulfide to be selected from a group comprising $CuS$, $CdS$, $ZnS$, $PdS$, $Ag_2S$ and mixtures thereof.

When the component containing metal element is a metal oxide, the combination of resin and metal oxide is preferably one wherein the resin is selected from a group comprising epoxy resin, polyimide resin, fluorine-based resin and mixtures thereof, and the metal oxide is selected from a group comprising $FeO$, $NiO$, $CoO$, $MnO$ and mixtures thereof. It is additionally desirable for the resin to be selected from a group comprising epoxy resin, polyimide resin and mixtures thereof, and for the metal oxide to be selected from a group comprising $FeO$, $NiO$, $CoO$, $MnO$ and mixtures thereof.

In the present invention, the amount of introduced component containing metal element in the non-charging resin composite material, as described above, is such that the ratio of the surface resistance of said resin composite material to the resistivity of said component containing metal element is within a certain range, preferably $10^{12}$ to $10^{17}$ $(1/\square cm)$, with $10^{13}$ to $10^{15}$ $(1/\square cm)$ being preferred. Thus, the weight of the component containing metal elements present at the surface of the resin composite material varies in accordance with the resistivity of said component containing metal element. For example, when the component containing metal element is copper, the amount is preferably $0.005\text{-}5$ $g/m^2$ of surface area, with $0.01\text{-}0.3$ $g/m^2$ of surface area being preferred.

The component containing metal element that is introduced into the resin base in the non-charging resin composite material of the present invention can be present on the base in any form, provided that it exhihits non-charging properties. For example, the component containing metal element can be present in isolated regions on the base surface as fine particles, or can be present as a coating or network structure, as well as combinations thereof.

The distribution and grain diameter of the grains when the material has a particulate form can be determined appropriately in accordance with various configurations such as the thickness of the coating when a coating is formed, or the conductivity of the component containing metal element that is introduced. The introduction mode for the component containing metal element can be modulated in accordance with changing factors regarding the following processes (1)-(3) of the method for manufacturing said non-charging resin composite material: (1) the process in which the resin base is treated with ion exchange group introduction agent, (2) the process in which the base is treated with liquid containing metal ions, and (3) the process wherein component containing metal element is introduced at the resin surface by means of a conversion treatment.

The component containing metal element introduced onto the resin base in the non-charging resin composite material of the present invention has a more uniform distribution in comparison to cases wherein material is introduced by conventional electroless plating, and also has superior binding with respect to the base resin. When the component containing metal element is to be formed as a coating, the film thickness of the formed coating is more uniform than with films obtained by conventional methods. Although a theoretical grasp of the problem cannot be expected, it is thought that the improvement in binding of component containing metal element and the uniformity of the distribution and film thickness in the resin composite material of the present invention are due to the uniform introduction, at the molecular level, of conductive regions of metal ions deriving from the component containing metal element on the resin base.

The resin composite material pertaining to the present invention described above can be manufactured by a method that comprises 1) a process in which the resin base is treated with ion exchange group introduction agent, 2) a process wherein treatment is carried out with liquid containing metal ions, and 3) a process in which a conversion treatment is carried out to form component containing metal elements on the surface of the resin. These various processes are described in detail below.

Process (1). In the method for forming the resin composite material of the present invention, the resin base is first treated with ion exchange group introduction agent. By means of this ion exchange group introduction agent treatment, groups having ion exchange capacity are introduced. In the present invention, the groups having ion exchange capacity that are introduced into the resin are thought to undergo ion exchange in process (2).

The ion exchange group introduction agent treatment of process (1) is carried out by bringing ion exchange group introduction agent into contact with resin base. The contact method, time and contact temperature are adjusted appropriately so that conditions obtain whereby the desired amount of groups having ion exchange capacity are introduced into the resin base, and the resin base is not damaged. In terms of the contact method, immersion can be cited as an example, but methods are not restricted to this one. In process (1) pertaining to the present invention, treatment with ion exchange group introduction agent treatment is carried out. Said treatment can be carried out once, or multiple treatments can be carried out using the same or different introduction agents.

The ion exchange group introduction agent pertaining to the present invention includes any agent that can introduce groups having ion exchange capacity into base resin. Although Lewis acids or Lewis bases are cited as preferred, substances are not restricted to these. Preferred ion exchange group introduction agents are sulfuric acid, fuming sulfuric acid, sulfur trioxide, chlorosulfuric acid, sulfuryl chloride and other sulfonation agents; hydrochloric acid, nitric acid, formic acid, citric acid, lactic acid and other acids; sodium hydroxide, potassium hydroxide, ammonia and other alkalis; and in addition, amination agents, nitration agents, cyanation agents, and oxidation agents. Additionally desirable substances are sulfuric acid, potassium hydroxide and sodium hydroxide. The groups having ion exchange capacity that are introduced by said ion exchange group introduction agent treatment can be cation exchange groups or anion exchange groups. Examples include carboxyl groups, thiocarboxyl groups, dithiocarboxyl groups, sulfo groups (sulfonic acid groups), sulfino groups, sulfeno groups, haloformyl groups, carbamoyl groups, hydrazinocarbonyl groups, amidino groups, cyano groups, nitrilo groups, isocyan groups, cyanato groups, isocyanato groups, thiocyanato groups, isothiacyanato groups, formyl groups, hydroxyl groups, carboxyl groups, thioformyl groups, thioxo groups, mercapto groups, hydropyroxyl groups, amino groups, imino groups, hydrazino groups, diazo groups, azido groups, nitro groups and nitroso groups, but groups are not restricted to these. It is preferable for the groups having ion exchange capacity to be carboxyl groups, hydroxyl groups, carbonyl groups, amino groups, imino groups, cyano groups, nitro groups and sulfo groups. Carboxyl groups, hydroxyl groups and sulfo groups are additionally desirable. With cation exchange groups, ion exchange occurs with cationic metal ions in process (2), and with anionic exchange groups, ion exchange occurs with anionic metal ions in process (2).

For example, when sulfuric acid is used as the ion exchange group introduction agent, the concentration of introduction agent is generally 5-17.5 M, with a concentration of 15-17 M being preferred. If the concentration is less than 5 M, time will be required for treatment, which is undesirable. On the other hand, if the concentration exceeds 17.5 M, the reaction with respect to non-conductive material will be vigorous, and the material structure will be greatly modified, which is undesirable. The treatment temperature is generally 20-90°C, with 40-70°C being preferred. The treatment time is ordinarily 30 sec to 30 min, with 2 min to 20 min being preferred.

In addition, when alkali solution such as aqueous solution of potassium hydroxide or sodium hydroxide is used as ion exchange group introduction agent, the concentration of alkali solution is 0.1-10 M, with 1-5 M being preferred. If this concentration is 10 M or greater, the non-conductive substance will be too strongly attacked, and degradation of the non-conductive substance will readily occur. The solvent used for alkali treatment can be water or alcohol. The treatment temperature is 10-80°C, with 25-50°C being preferred. The treatment time is 30 sec to 10 min, with 2-5 min being preferred. When alcohol is used as solvent, the same effect as when water is used as solvent can be obtained but at a lower alkali concentration, lower temperature and/or shorter time.

Process (2): Next, a description will be presented regarding process (2) of the manufacture method for the resin composite material pertaining to the present invention. In process (2) above, the resin base that has been treated with ion exchange group introduction agent in process (1) above is treated with liquid containing metal ions. Metal ions are introduced into the resin base surface by means of this treatment. It is thought that the groups having ion exchange capacity that have been introduced in the resin base surface in process (1) undergo an ion exchange reaction with the metal ions.

A solution in which the metal element that constitutes the component containing the target metal element is present as metal ions may be used for the liquid containing metal ions. For example, when a metal is to be formed, a solution that contains the desired metal ions is sufficient, and when an alloy is formed, a solution can be used that contains the metal ions of all or some of the metal components that constitute the alloy. For alloys, when a solution is used that contains the metal ions of some of the metal components that constitute the alloy in process (2), it is possible to convert the material to the desired alloy by subsequent treatment with a solution containing the other metal components in process (3). In addition, when a component containing metal compound such as metal oxide or metal sulfide is to be formed, a solution that contains the metal ions of the metal component contained in said metal compound may be used.

The metal ions may be complex ions in solution, and in such a case, the complex ions can be any complex anion or complex cation. The liquid containing metal ions is generally used as an aqueous solution. However, depending on the metal ions that are used, the medium can be methanol or other organic solvent, or an organic mixed solvent medium composed of water and organic medium. As necessary, stabilizer for maintaining pH or complexing agent for preventing sedimentation of metal ions can also be blended in the liquid containing metal ions.

The metal clement ions cited above can be cited as metal ions contained in the liquid containing metal ions used in the present invention.

In general, the metal ions are blended in the liquid containing metal ions in the form of metal compound or metal salt. There are no particular restrictions on the type of metal salt or metal compound that is used, and an appropriate soluble metal compound or metal salt can be used in accordance with the type of metal. Appropriate examples that can be cited include formate, acetate, chloroacetate, oxalate and other carboxylates, sulfate, sulfite, thiosulfate, fluoride, chloride, bromide, iodide, nitrate, nitrite, bicarbonate, hydroxide, phosphate, phosphite, pyrophosphate, metaphosphate, selenate, thiocyanate, tetrafluoroborate, trisethylenediamine chloride, cyanide, chlorate, perchlorate, formate, perbromate, iodate and periodate. Preferred substances are sulfate, chloride and nitrate, with sulfate being preferred.

The appropriate concentration of metal ion in the liquid containing metal ions is ordinarily about 0.01-1 mol/L, with about 0.03-0.1 mol/L being preferred. In addition, when the component containing the target metal element is in a form whereby multiple metal component are contained in alloys or mixtures of metal compounds, a solution can be used wherein metal ions are contained at molar ratios that correspond to the molar ratios in the metal component of the final molding. In this case, the total concentration of these multiple metal ions should be such that the aforementioned ranges are satisfied.

The method for treating the resin base with solution containing metal ions has no particular restrictions, and ordinarily, it is preferable to immerse the resin base that has been treated with ion exchange group introduction agent in process (1) into the liquid containing metal ions. This treatment is carried out, for example, at a temperature of about 20-80°C, with about 25-60°C being preferred, and for a period of about 1-10 min, with about 3-5 min being preferred. In addition, after treating the resin base with liquid containing metal ions, the material can be washed with water as necessary and subjected to drying or other treatments.

In process (3) that is carried out after treatment with liquid containing metal ions, the pH of the liquid containing metal ions decreases. In order to replenish the liquid with hydroxide ions, the pH of the liquid containing metal ions is appropriately adjusted to a weakly acidic to neutral range, and specifically, a pH of about 2-6, with about 3-4 being preferred.

Process (3): Process (3) of the manufacture method for the resin composite material pertaining to the present invention will now be discussed. In process (3), component containing metal element is formed a the surface of the resin base in a conversion process performed on the metal ions that have been introduced in process (2) described above. The term "conversion" in the invention of this application refers to a binding condition that is different from the original condition due to a change in binding state of the metal element. It is necessary for the component containing metal element to be formed by means of conversion in the invention of this application, and conversion in which component containing metal elements is not formed is not included in the term "conversion" pertaining to the present invention. The metal ion conversion treatment can be carried out in accordance with the type of component containing metal elements that is the final objective. For example, the conversion treatment in process (3) is a reduction treatment when the component containing metal elements is a metal component, and treatment is carried out with solution containing sulfide for a metal sulfide component; and treatment is carried out with solution containing hydroxide for a metal hydroxide component. However, examples are not restricted to these.

When the metal ion conversion treatment is a reduction treatment, the reduction treatment method has no particular restrictions, and any method can be used that involves metal formation via the reduction of metal ions introduced onto the resin base surface by means of the treatment of process (2). Ordinarily, a method can be used wherein the resin base that has been treated in process (2) is immersed in solution containing reducing agent.

There are no particular restrictions on the reducing agent used in reduction of the metal ions that have been introduced at the resin base surface, provided that the substance can cause the deposition of metal via the reduction of said metal ions. Ordinarily, the solution containing reducing agent can be used in the form of an aqueous solution. Examples of reducing agents used in this case that can be cited include sodium borohydride, dimethylaminoborane (DMAB), trimethylaminoborane (TMAB), hydrazine, formaldehyde and derivatives of these various compounds, sodium sulfite and other sulfites, and sodium hypophosphate and other hypophosphites. Any conventional reducing agent can be used, however, and substances are not restricted to these. The concentration of reducing agent in the aqueous solution is ordinarily about 0.0025-3 mol/L, with about 0.01-1.5 mol/L being preferred. The reducing temperature is ordinarily about 20-90°C, with about 25-80°C being preferred, and the treatment time is about 1-10 min, with about 3-5 min being preferred.

Substances that can be used as reducing agents are selenium urea, arsenite, antimony (III) chloride and tellurium chloride, and when these reducing agents are used in the reduction of metal ions that have adsorbed chemically to the acidic groups, the metal component in the reducing agent, specifically, Se when selenium urea is used, As when arsenite is used, Sb when antimony (III) chloride is used, or Te when tellurium chloride is used, is reduced to form a metal component and metal compound. The conditions of use of reducing agent such as selenium urea and arsenite can be the same as when the above various reducing agents are used, and these can be used in conjunction with the aforementioned various reducing agents. In particular, when selenium urea is used in conjunction with other reducing agents, the stability of selenium urea in the reducing agent solution can be improved. Using selenium urea in conjunction with other reducing agents is thus preferred.

With the reduction treatment carried out using the aqueous solution containing the aforementioned reducing agent, when sufficient metallization is difficult, a reducing treatment can be carried out using organic solvent solution containing reducing agent with stronger reducing capacity. Examples of reducing agents that can be used with organic solvents include metallic Li, Na and K (solvent: liquid ammonia, amines, etc.), trialkylaluminum (solvent: dioxane, toluene, tetrahydrofuran, etc.) and tri-n-butyltin and other tin hydride compounds (solvent: ethylene-based solvent, benzene, toluene, etc.). When the reducing treatment is carried out using organic solvent solutions of these reducing agents, it is desirable to determine the reducing agent concentration and reduction conditions appropriately in order to perform sufficient metallization in accordance with the type of metal salts that are to be reduced.

The reduction treatment can be carried out by irradiating the resin base having introduced metal ions with electromagnetic radiation. The reduction treatment carried out by electromagnetic radiation is a process in which electromagnetic excitation energy is utilized for the reduction reaction so that the metal is deposited from the metal ions that have been introduced. Any type of electromagnetic energy can be used for the electromagnetic radiation used for the reduction treatment, provided that it has excitation energy that can bring about the reduction of metal ions. However, ultraviolet radiation is preferred. The power of the electromagnetic radiation can be between 10 W and 10 kW, but in order to reduce treatment time, 100 W to 1 kW is preferred. The electromagnetic radiation irradiation time is 30 sec to 1 h, with 1 min to 10 min being preferred.

As necessary, irradiation with ultraviolet radiation can be carried out after mounting a glass mask. When a glass mask is mounted, the metal ions can be selectively reduced in only the desired regions. Any type of mask can used, provided that it does not allow passage of ultraviolet radiation.

When a metal sulfide component is to be formed, the resin base that has been treated with liquid containing metal ions in process (2) is treated with solution containing sulfide. The sulfide that is contained in the solution containing sulfide used for the treatment has no particular restrictions, provided that it is a substance that generates sulfide ions in solution. Examples of this type of sulfide that can be cited include sodium sulfide, potassium sulfide, and ammonium sulfide.

The amount of sulfide in the solution containing sulfide is generally about 0.05-1.2 mol/L, with about 0.1-0.5 mol/L being preferred. If the sulfide concentration is less than 0.05 mol/L, it will be difficult to bring about sufficient deposition of metal sulfide, whereas if this amount exceeds 1.2 mol/L, the improvement in effect will not keep pace with the increase in concentration, which is undesirable from an economic standpoint. The solution containing sulfide can be an aqueous solution, organic solvent solution or a mixed solution of water and organic solvent.

The pH of the solution containing sulfide can be weakly acidic to alkaline, and it is preferable to adjust the value to a pH of about 4-11, with about 6-10 being preferred.

Treatment with the solution containing sulfide can be carried out by a method in which the resin base containing metal ions introduced in process (2) is immersed in solution containing sulfide. The treatment temperature is generally about 20-80°C, with about 25-60°C being preferred. If the treatment temperature is less than 20°C, then formation of the metal sulfide will tend to be insufficient, whereas if this temperature exceeds 80°C, the solution will become unstable, which is undesirable. The treatment time is ordinarily about 2-30 min.

When a metal hydroxide component is to be formed, the resin base that has been treated with the liquid containing metal ions in process (2) is treated with solution containing hydroxide, and subsequently, a thermal treatment is carried out in order to form the metal hydroxide component on said resin base.

This treatment process can be carried out using any desired compound, provided that it is a compound that can form hydroxide ions in solution. Examples of this type of hydroxide include NaOH, $NH_4OH$ and KOH.

The concentration of hydroxide in the liquid containing hydroxide is generally about 0.025-12 mol/L, with about 0.1-5 mol/L being preferred. If the concentration of hydroxide compound is too low, then sufficient hydroxide will not be formed, whereas if the hydroxide concentration is too high, there will be undesirable cases in which the resin is degraded. The solution containing hydroxide can be an aqueous solution, organic solvent or mixed solution composed of water and organic solvent.

The treatment carried out with solution containing hydroxide is ordinarily carried out by a method in which the resin base containing metal ions introduced in process (2) is immersed in solution containing hydroxide. The treatment temperature is generally about 10-80°C, with about 20-50°C being preferred. If the treatment temperature is too low, formation of metal hydroxide will tend to be insufficient, whereas if the treatment temperature is to high, there will be undesirable cases in which the resin is degraded. The treatment time is ordinarily about 2-30 min.

By treatment with solution containing hydroxide in this manner, a metal hydroxide layer is formed at the surface of the resin base, and by subsequent heat treatment and dehydration, metal oxide component is formed on said resin base. The thermal treatment method is related to the heat resistance of the resin, but a high temperature is preferably used in a range at which the resin does not degrade. For example, with epoxy resin system resin bases, heating at about 80-150°C is preferred, and with polyimide system resin bases, heating at about 80-180°C is preferred, The heating time is generally about 30-120°C. The heating atmosphere has no particular restrictions, and the heating treatment can be carried out in air, or when $Fe_3O_4$ is to be formed, heating is preferably carried out in a reducing atmosphere such as a hydrogen atmosphere so that oxidation does not progress too extensively. The appropriate heating atmosphere can be determined in accordance with the characteristics of the target component.

[Working examples]

Manufacture of non-charging resin composite material using sulfuric acid

Working Example 1

Epoxy resin base (manufactured by Hitachi Kasei) was immersed for 15 min in 10 M sulfuric acid at 40°C, and sulfo cation exchange groups were introduced at the epoxy resin surface. The material was subsequently rinsed with water, and was then immersed for 5 min in 0.05 M copper sulfate solution at 25°C in order to introduce copper ions onto the epoxy resin surface. Next, after rinsing with water, the material was immersed for 10 min in 0.005 M sodium borohydride solution, thereby reducing the introduced copper ions to produce metal. The resistance at the surface of the base at this time was $1 \times 10^{10}$ $\Omega/\square$. The resistivity of copper is $1.67 \times 10^{-6}$ $\Omega \cdot cm$, and thus the ratio of the resin composite material surface resistance to the metal element containing component resistivity was $6.0 \times 10^{15}$ $(1/\square cm)$.

The "surface resistance ($\Omega/\square$)" used in the present invention is calculated by the following formula for a case where the region to be measured is coated with a conductive coating at a width of 1 mm and a length of 5 mm, and the resistance R is measured for a region that is not coated with conductive coating (region of length 5 mm).

$$\text{Surface electrical resistance } (\Omega/\square) = R\ (\Omega) \times \text{width (mm)/length (mm)}$$

Working Example 2

Epoxy resin base (manufactured by Hitachi Kasei) was immersed for 15 min in 12 M sulfuric acid solution at 60°C, thus introducing cation exchange sulfo groups at the epoxy resin surface. Subsequently the material was washed with water, and immersed for 5 min in 0.05 M copper sulfate solution at 25°C, thereby introducing copper ions at the epoxy resin surface. After rinsing with water and drying, the material was irradiated for 1h with ultraviolet light from a 140 W low-pressure mercury lamp to reduce the copper. The resistance at the surface at this time was $2 \times 10^{10}$ $\Omega/\square$. The resistivity of copper is $1.67 \times 10^{-6}$ $\Omega \cdot cm$, and thus the ratio of the resin composite material surface resistance to the metal element containing component resistivity was $1.2 \times 10^{16}$ $(1/\square cm)$.

Manufacture of non-charging resin composite material using sulfuric acid and alkali solution

Working Example 3

Polyimide resin base (Toray DuPont) was immersed for 4 min in 12 M sulfuric acid at 60°C. After washing with water, the material was immersed for 2 min in 1 M potassium hydroxide solution at 25°C. After then washing with water, the material was immersed for 5 min in 0.05 M copper sulfate solution at 25°C in order to introduce copper ions at the surface of the polyimide resin. After then washing with water, the material was immersed for 20 min in a 0.005 M sodium borohydride solution in order to reduce the copper ions to produce metal. The resistance at the surface at this time was $2 \times 10^{7}$ $\Omega/\square$. The resistivity of copper is $1.67 \times 10^{-6}$ $\Omega \cdot cm$, and thus the ratio of the resin composite material surface resistance to the metal element containing component resistivity was $1.2 \times 10^{13}$ $(1/\square cm)$

Working Example 4

Polyimide resin base (Toray DuPont) was immersed for 4 min in 14 M sulfuric acid solution at 50°C. After washing with water, the material was immersed for 2 min in 1 M potassium hydroxide solution at 25°C. After then washing with water, the material was immersed for 5 min in 0.05 M copper sulfate solution at 25°C in order to introduce copper ions at the surface of the polyimide resin. After then washing with water and drying, the material was irradiated for 5 min at 1 atm and 500 W at 25°C with ultraviolet light from a high-pressure mercury lamp to reduce the copper. The surface resistance of the surface at this time was $5 \times 10^{7}$ $\Omega/\square$. The resistivity of copper is $1.67 \times 10^{-6}$ $\Omega \cdot cm$, and thus the ratio of the resin composite material surface resistance to the metal element containing component resistivity was $3.0 \times 10^{13}$ $(1/\square cm)$.

Manufacture of non-charging resin composite material using alkali solution

Working Example 5

Polyimide resin base (Toray DuPont) was immersed for 5 min in 2 M potassium hydroxide solution at 25°C. After washing with water, the material was immersed for 5 min in 0.05 M copper sulfate solution at 25°C in order to introduce copper ions at the polyimide resin surface. After then washing with water, the material was immersed for 10 min in a 0.005 M sodium borohydride solution to reduce the introduced copper ions to metal. The resistance at the surface at this time was $4 \times 10^9$ $\Omega/\square$. The resistivity of copper is $1.67 \times 10^{-6}$ $\Omega \cdot cm$, and thus the ratio of the resin composite material surface resistance to the metal element containing component resistivity was $2.4 \times 10^{15}$ $(1/\square \cdot cm)$.

Working Example 6

Polyimide resin base (Toray DuPont) was immersed for 5 min in 4 M potassium hydroxide solution at 25°C. After washing with water, the material was immersed for 5 min in 0.1 M silver nitrate solution at 25°C in order to introduce silver ions at the polyimide resin surface. After then washing with water and drying, the material was irradiated for 1 h with ultraviolet light from a 140 W low-pressure mercury lamp to reduce the silver. The resistance at the surface at this time was $1 \times 10^{10}$ $\Omega/\square$. The resistivity of silver is $1.59 \times 10^{-6}$ $\Omega \cdot cm$, and thus the ratio of the resin composite material surface resistance to the metal element containing component resistivity was $6.3 \times 10^{15}$ $(1/\square \cdot cm)$.

As is clear from the results of Working Examples 1-6, a resin composite material having extremely small amounts of component containing metal element and having a surface resistance in a range whereby the material exhibits non-charging properties can be obtained by treating a resin base with ion exchange group introduction agent, followed by treatment with liquid containing metal ions to introduce metal ions, and conversion of said metal ions.

[Effect of the invention]

As described above, the resin composite material of the present invention has extremely small amounts of component containing metal element introduced at the surface of a resin base such that charging of the resin base can be prevented without increasing the conductivity intrinsic to the resin base above a certain level, which has been difficult in the past. By this means, said non-charging resin composite material can prevent damage to the base from electrostatic electricity caused by charging, and can prevent detrimental effects such as the adhesion of dirt or dust on the base.

In addition, the aforementioned non-charging resin composite material provides excellent binding of the component containing metal element present at the surface of the resin base with respect to the base, and thus anti-charging effects can be obtained that are persistent rather than temporary.

Moreover, the useful non-charging resin composite material of the type described above can be readily manufactured by means of employing a simple method whereby the surface of a resin base that has been treated with ion exchange group introduction agent is treated with liquid containing metal ions to introduce metal ions, followed by conversion of said metal ions.

**Claims**

1.    A resin composite material in which a component containing a metal element is present at the surface of a resin base, which is obtained by using a resin base treated with ion exchange group introduction agent, and treating its surface with a liquid containing metal ions to introduce metal ions, and then converting said metal ions, said non-charging resin composite material being **characterized in that** the ratio of the surface resistance of said resin composite material to the resistivity of said component containing metal element is $10^{12}$ to $10^{17}$ $(1/\square \cdot cm)$.

2.    The non-charging resin composite material according to Claim 1, wherein the surface resistance of the resin composite material is $10^6$-$10^{11}$ $\Omega/\square$.

3.    The non-charging resin composite material according to Claim 1 or 2, wherein the component containing metal element is selected from a group comprising metals, metal arsenides, metal antimonides, metal selenides, metal tellurides, metal sulfides and metal oxides.

4.    The non-charging resin composite material according to any of Claims 1-3, wherein the metal element is a metal element selected from V, Cr, Mn, Fe, Co, Ni, Cu, Ga, As, Se, Mo, Ru, Rh, Pd, Ag, Cd, In, Sb, Te, Os, Ir, Pt, Au, Hg, Pb, Bi and mixtures thereof.

5. The non-charging resin composite material according to any of Claims 1-4, wherein the resin is a resin selected from a group comprising epoxy resin, polyimide resin, vinyl resin, phenol resin, nylon resin, polyphenylene ether resin, polypropylene resin, fluorine-based resin, ABS resin and mixtures thereof.

6. A method for manufacturing the non-charging resin composite material according to any of Claims 1-5, which comprises (1) a process wherein resin base is treated with ion exchange group introduction agent, (2) a process wherein treatment is carried out with a liquid containing metal ions, and (3) a process wherein component containing metal element is introduced at the surface of the resin by a conversion treatment.